# FASCICULE DE BREVET EUROPEEN

(11) **EP 3 106 375 B1**
(45) Date de publication et mention de la délivrance du brevet: **21.03.2018**
(21) Numéro de dépôt: 16168845.2
(22) Date de dépôt: 10.05.2016
(51) Int. Cl.: B62K 5/01, B62D 61/08, B60G 17/005, B60G 21/067, B60G 21/10, B62K 5/027, B62K 5/10, B60G 17/016

(54) **DISPOSITIF DE SUSPENSION HYDROPNEUMATIQUE POUR UN VÉHICULE AUTOMOBILE INCLINABLE, À ÉLECTROVANNES À ÉTATS FONCTION DE L'INCLINAISON**
HYDROPNEUMATISCHE FEDERUNGSVORRICHTUNG FÜR NEIGBARES KRAFTFAHRZEUG, MIT MAGNETVENTILEN FÜR DEN ENTSPRECHENDEN FUNKTIONSSTATUS DER NEIGUNG
HYDROPNEUMATIC SUSPENSION DEVICE FOR A TILTABLE MOTOR VEHICLE, HAVING SOLENOID VALVES WITH STATES ACCORDING TO THE TILT

(30) Priorité: 15.06.2015 FR 1555448
(43) Date de publication de la demande: 21.12.2016
(73) Titulaire: PSA Automobiles SA, 78300 Poissy (FR)
(72) Inventeur: BERTHIAS, GILLES, 91270 VIGNEUX SUR SEINE (FR); HERNETTE, VINCENT, 75014 PARIS (FR); GERARD, FABIEN, 91400 ORSAY (FR)

(56) Documents cités:
- WO-A1-01/36253
- WO-A1-97/27071
- WO-A1-2009/087595
- WO-A1-2011/161334
- US-A1- 2009 121 448

## Description

L'invention concerne les dispositifs de suspension hydropneumatique qui sont destinés à équiper des véhicules automobiles inclinables dans les virages. Un exemple d'un tel dispositif est décrit dans le document WO 2009/087595 A1. On entend ici par « véhicule automobile inclinable » un véhicule terrestre disposant d'au moins une machine motrice lui permettant de se déplacer, pouvant s'incliner dans les virages et comprenant soit un train comportant une roue droite et une roue gauche, et un autre train comportant une unique roue, soit deux trains comportant chacun une roue droite et une roue gauche, Par conséquent, il pourra s'agir d'une voiture à trois ou quatre roues, ou d'une motocyclette à trois roues constituant un tricycle (comme par exemple un scooter à trois roues ou un « trike »), ou d'une motocyclette à quatre roues constituant un quadricycle (comme par exemple un « quad »), ou encore de tout autre véhicule à quatre roues et train arrière étroit doté d'une possibilité de forte inclinaison en courbe.

Les trains à deux roues des véhicules automobiles inclinables comprennent généralement des organes mécaniques ayant des articulations et des cinématiques plus ou moins complexes, ce qui les rend encombrants lourds et onéreux. C'est par exemple le cas de ceux qui comprennent un système de palonnier reliant cinématiquement leur roue gauche à leur roue droite.

Afin d'améliorer la situation, il a été proposé d'utiliser des amortisseurs droit et gauche couplés respectivement aux roues droite et gauche et reliés entre eux par un circuit hydraulique piloté par des moyens de contrôle. Le circuit hydraulique comprend, par exemple, un conduit pour la circulation d'huile reliant entre elles les chambres de compression des amortisseurs droit et gauche, une électrovanne implantée au milieu du conduit et communiquant avec un accumulateur central. Ce dernier comprend une chambre séparée par une membrane mobile en deux sous-parties, l'une recevant l'huile du conduit et l'autre contenant un gaz sous haute pression. Il définit ainsi un amortisseur central lorsque le véhicule circule et un verrou de blocage de roulis (ou « roll lock ») lorsque l'électrovanne est fermée du fait de l'utilisation du frein de parking.

Hélas, l'amélioration technique décrite ci-avant présente des inconvénients, notamment lorsque le véhicule circule à faible vitesse. En effet, la fonction de blocage de roulis n'est utilisable qu'à l'arrêt. Les deux roues n'étant pas indépendantes et étant gérées par un seul amortisseur central, si la fonction de blocage du roulis est activée, il n'y a plus du tout de suspension puisque la vanne de fermeture se situe avant la suspension, et donc le véhicule devient très inconfortable, et même à faible vitesse la stabilité du véhicule est compromise.

L'invention a donc notamment pour but d'améliorer la situation.

Elle propose notamment à cet effet un dispositif de suspension hydropneumatique, destiné à équiper un véhicule automobile inclinable ayant un train comportant des roues droite et gauche, et comprenant des amortisseurs droit et gauche couplés respectivement aux roues droite et gauche et reliés entre eux par un circuit hydraulique piloté par des moyens de contrôle.

Ce dispositif se caractérise par le fait :
- qu'il comprend également des accumulateurs droit et gauche communiquant respectivement avec les amortisseurs droit et gauche,
- que son circuit hydraulique comprend des première et deuxième électrovannes associées respectivement à des premier et second moyens anti-retour autorisant des circulations de fluide (hydraulique) selon des sens opposés, et
- que ses moyens de contrôle sont agencés :
   - soit pour placer les première et deuxième électrovannes dans un état ouvert lorsqu'une inclinaison du véhicule par rapport à une direction verticale est comprise entre zéro et une première valeur,
   - soit pour placer la première, respectivement deuxième, électrovanne dans un état ouvert et la deuxième, respectivement première, électrovanne dans un état partiellement ouvert lorsque l'inclinaison est vers la droite, respectivement la gauche, et comprise entre la première valeur et une seconde valeur,
   - soit encore pour placer la première, respectivement deuxième, électrovanne dans un état ouvert et la deuxième, respectivement première, électrovanne dans un état fermé lorsque l'inclinaison est vers la droite, respectivement la gauche, et supérieure à la seconde valeur.

On obtient ainsi un blocage de roulis, à l'arrêt, en roulant, ou en cas d'inclinaison trop importante, qui ne bloque pas la suspension verticale des deux roues, et donc qui permet à ces dernières de demeurer indépendantes.

Le dispositif selon l'invention peut comporter d'autres caractéristiques qui peuvent être prises séparément ou en combinaison, et notamment :
- ses moyens de contrôle peuvent être agencés pour choisir la première valeur et/ou la seconde valeur en fonction d'une vitesse en cours du véhicule ;
   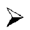 ses moyens de contrôle peuvent être agencés pour choisir la première valeur dans un intervalle qui est compris entre environ 10° et environ 20° ;
   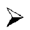 ses moyens de contrôle peuvent être agencés pour choisir la seconde valeur dans un intervalle qui est compris entre environ 25° et environ 35° ;
- ses moyens de contrôle peuvent être agencés pour placer les première et deuxième électrovannes dans un état fermé lorsque la vitesse en cours du véhicule est inférieure à un seuil prédéfini alors qu'une machine motrice du véhicule est en fonctionnement ;
- il peut également comprendre des troisième et quatrième électrovannes intercalées respectivement entre l'amortisseur droit et l'accumulateur droit et entre l'amortisseur gauche et l'accumulateur gauche afin de contrôler l'accès respectivement aux accumulateurs droit et gauche. Dans ce cas, ses moyens de contrôle peuvent être agencés :
   - soit pour placer toutes les électrovannes dans un état ouvert lorsque l'inclinaison est comprise entre zéro et la première valeur,
   - soit pour placer la première, respectivement deuxième, électrovanne et les troisième et quatrième électrovannes dans un état ouvert et la deuxième, respectivement première, électrovanne dans un état partiellement ouvert lorsque l'inclinaison est vers la droite, respectivement la gauche, et comprise entre les première et seconde valeurs,
   - soit pour placer la première, respectivement deuxième, électrovanne et les troisième et quatrième électrovannes dans un état ouvert et la deuxième, respectivement première, électrovanne dans un état fermé lorsque l'inclinaison est vers la droite, respectivement la gauche, et supérieure à la seconde valeur ;
   - soit encore pour placer toutes les électrovannes dans un état fermé lorsque la vitesse en cours du véhicule est nulle et qu'une machine motrice du véhicule ne fonctionne pas.
- les premier et second moyens anti-retour peuvent être des clapets anti-retour.

L'invention propose également un véhicule automobile inclinable et comprenant au moins un train comportant des roues droite et gauche et un dispositif de suspension hydropneumatique du type de celui présenté ci-avant.

Un tel véhicule peut, par exemple, également comprendre un autre train comportant une unique roue, afin de constituer un tricycle (comme par exemple un scooter à trois roues ou un « trike »). Mais il pourrait également comprendre deux trains de roues droite et gauche, afin de constituer un quadricycle (comme par exemple un « quad »).

D'autres caractéristiques et avantages de l'invention apparaîtront à l'examen de la description détaillée ci-après, et des dessins annexés, sur lesquels :
- la figure 1 illustre schématiquement et fonctionnellement, dans une vue du dessus, un exemple de véhicule automobile à trois roues équipé d'un exemple de réalisation d'un dispositif de suspension selon l'invention,
- la figure 2 illustre schématiquement et fonctionnellement, dans une vue en coupe verticale et transversale, le véhicule de la figure 1 avec son dispositif de suspension placé dans un premier état général (adapté à des faibles inclinaisons),
- la figure 3 illustre schématiquement et fonctionnellement, dans une vue en coupe verticale et transversale, le dispositif de suspension des figures 1 et 2, placé dans un deuxième état général (adapté à des inclinaisons intermédiaires),
- la figure 4 illustre schématiquement et fonctionnellement, dans une vue en coupe verticale et transversale, le dispositif de suspension des figures 1 et 2, placé dans un troisième état général (adapté à des fortes inclinaisons),
- la figure 5 illustre schématiquement et fonctionnellement, dans une vue en coupe verticale et transversale, le dispositif de suspension des figures 1 et 2, placé dans un quatrième état général (adapté à l'arrêt, moteur tournant, ou à très faible vitesse), et
- la figure 6 illustre schématiquement et fonctionnellement, dans une vue en coupe verticale et transversale, le dispositif de suspension des figures 1 et 2, placé dans un cinquième état général (adapté au stationnement).

L'invention a notamment pour but de proposer un dispositif de suspension hydropneumatique DS destiné à équiper un véhicule automobile inclinable V ayant au moins un train TV comportant une roue droite RD et une roue gauche RG.

Dans ce qui suit, on considère, à titre d'exemple non limitatif, que le véhicule automobile inclinable V est un scooter à trois roues. Mais l'invention n'est pas limitée à ce type de véhicule automobile inclinable. Elle concerne en effet tout type de véhicule terrestre disposant d'au moins une machine motrice lui permettant de se déplacer, pouvant s'incliner dans les virages et comprenant soit un train comportant une roue droite et une roue gauche, et un autre train comportant une unique roue, soit deux trains comportant chacun une roue droite et une roue gauche. Par conséquent, il pourra s'agir d'une voiture à trois ou quatre roues, ou d'une motocyclette à trois roues constituant un tricycle (comme par exemple un scooter à trois roues ou un « trike »), ou d'une motocyclette à quatre roues constituant un quadricycle (comme par exemple un « quad »), ou encore de tout autre véhicule à quatre roues et train arrière étroit doté d'une possibilité de forte inclinaison en courbe.

Par ailleurs, on considère dans ce qui suit, à titre d'exemple non limitatif, que le véhicule automobile inclinable V ne comprend qu'une machine motrice lui permettant de se déplacer. Cette machine motrice est par exemple un moteur thermique. Mais un véhicule automobile inclinable V peut comprendre au moins un moteur thermique et/ou au moins une machine électrique.

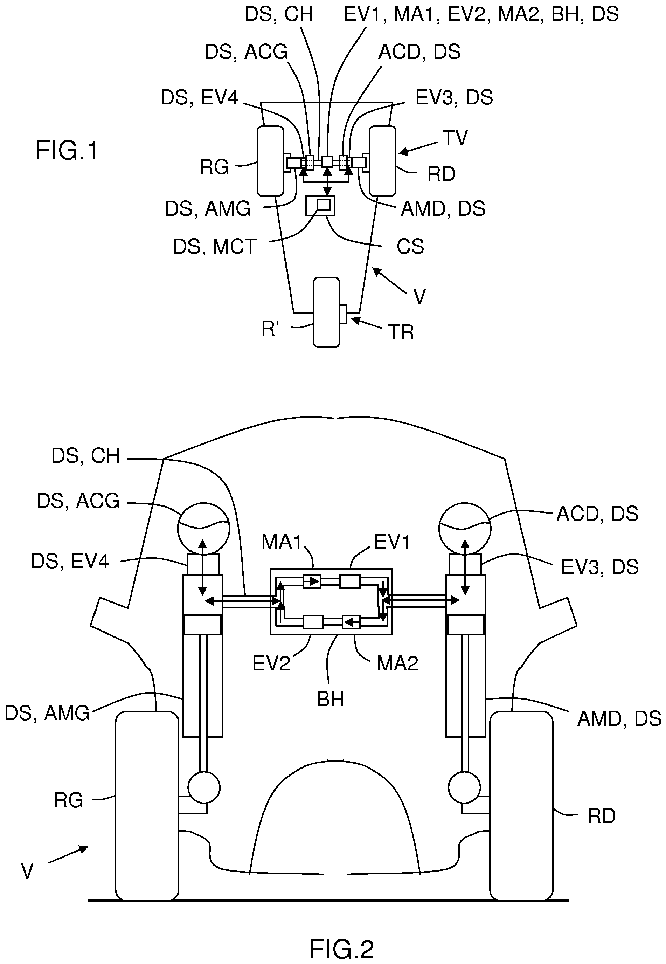

On a schématiquement représenté sur la figure 1 un exemple de véhicule automobile inclinable V, ici à trois roues RD, RG et R'. Dans cet exemple non limitatif, le véhicule (automobile inclinable) V comprend un train avant TV comportant une roue droite RD et une roue gauche RG, et un train arrière TR comportant une unique roue R'. Mais dans une variante de réalisation le véhicule V pourrait comprendre des trains avant et arrière comportant chacun une roue droite et une roue gauche.

Ce véhicule V est par ailleurs équipé d'un dispositif de suspension hydropneumatique DS selon l'invention, couplé aux roues droite RD et gauche RG de son train avant TV.

Comme illustré au moins partiellement sur les figures 1 et 2, un dispositif de suspension hydropneumatique DS, selon l'invention, comprend au moins un amortisseur droit AMD, un amortisseur gauche AMG, un circuit hydraulique piloté par des moyens de contrôle MCT, un accumulateur droit ACD et un accumulateur gauche ACG.

L'amortisseur droit AMD comprend une extrémité inférieure couplée à la roue droite RD. L'amortisseur gauche AMG comprend une extrémité inférieure couplée à la roue gauche RG. Chaque extrémité inférieure est par exemple la partie terminale de l'axe d'un piston, appelé tige de vérin. Ces amortisseurs droit AMD et gauche AMG sont par ailleurs reliés entre eux par le circuit hydraulique. Ils sont par exemple agencés sous la forme de vérins comprenant chacun une chambre supérieure de volume variable communiquant avec le circuit hydraulique.

Comme illustré sur les figures 2 à 6, le circuit hydraulique comprend au moins une première électrovanne EV1 associée à un premier moyen anti-retour MA1 autorisant la circulation d'un fluide (comme par exemple de l'huile) selon un premier sens, et une deuxième électrovanne EV2 associée à un second moyen anti-retour MA2 autorisant la circulation de ce même fluide selon un second sens opposé au premier sens.

Ici, le premier sens va de l'amortisseur gauche AMG vers l'amortisseur droit AMD, et donc le second sens va de l'amortisseur droit AMD vers l'amortisseur gauche AMG.

La première électrovanne EV1 est couplée au premier moyen anti-retour MA1 via un sous-conduit et communique via un autre sous-conduit avec une partie droite d'un conduit principal CH qui communique également avec la chambre supérieure de l'amortisseur droit AMD (dédiée à l'huile). Le premier moyen anti-retour MA1 communique via un autre sous-conduit avec une partie gauche du conduit principal CH qui communique également avec la chambre supérieure de l'amortisseur gauche AMG (dédiée à l'huile).

La deuxième électrovanne EV2 est couplée au second moyen anti-retour MA2 via un sous-conduit et communique via un autre sous-conduit avec la partie droite du conduit principal CH. Le second moyen anti-retour MA2 communique via un autre sous-conduit avec la partie gauche du conduit principal CH.

On notera que les première EV1 et deuxième EV2 électrovannes peuvent être placées dans au moins trois états : un état (totalement) ouvert dans lequel ils laissent passer l'intégralité du fluide parvenant sur leur entrée sans perte de débit, un état (totalement) fermé dans lequel ils interdisent tout passage du fluide parvenant sur leur entrée, et un état partiellement ouvert dans lequel ils laissent passer une partie du fluide parvenant sur leur entrée avec une restriction de débit et une perte de charge. De préférence, ils sont de type dit « proportionnel », et donc peuvent prendre une pluralité d'états partiellement ouverts différents, compris entre l'état fermé et l'état ouvert, en fonction d'une tension de commande définie par les moyens de contrôle MCT.

De préférence, l'état par défaut des première EV1 et deuxième EV2 électrovannes est l'état (totalement) ouvert. Mais dans une variante l'état par défaut des première EV1 et deuxième EV2 électrovannes pourrait être l'état (totalement) fermé.

Comme illustré non limitativement sur les figures 2 à 6, les première EV1 et deuxième EV2 électrovannes, les premier MA1 et second MA2 moyens anti-retour, et les différents sous-conduits peuvent être logés dans un boîtier hydraulique BH qui est couplé aux moyens de contrôle MCT.

Par exemple, les premier MA1 et second MA2 moyens anti-retour peuvent être des clapets anti-retour.

Dans l'exemple de réalisation illustré non limitativement sur la figure 1, les moyens de contrôle MCT sont installés dans un calculateur CS du véhicule V, par exemple chargé de la supervision de plusieurs organes. Mais cela n'est pas obligatoire. En effet, ils pourraient faire partie d'un calculateur appartenant au dispositif DS. Par ailleurs, ces moyens de contrôle MCT peuvent être réalisés sous la forme de modules logiciels (ou informatiques (ou encore « software »)), ou bien d'une combinaison de circuits électroniques (ou « hardware ») et de modules logiciels.

Les moyens de contrôle MCT sont agencés pour déterminer les états dans lesquels doivent être placées les électrovannes (notamment EV1 et EV2) en fonction, au moins, de l'inclinaison du véhicule V par rapport à la direction verticale. Plus précisément, ils sont agencés pour définir au moins trois états généraux du dispositif DS, illustrés sur les figures 2 à 4.

Un premier état général est illustré sur la figure 2. Il correspond à un placement des première EV1 et deuxième EV2 électrovannes dans leur état ouvert lorsque l'inclinaison du véhicule V (par rapport à la direction verticale) est comprise entre zéro (0) et une première valeur v1. On comprendra que ce premier état général est adapté à des faibles inclinaisons qui sont choisies librement par le conducteur sans contrôle de l'inclinaison (ou roulis) par les moyens de contrôle MCT.

En cas de passage d'un obstacle sur l'une des deux roues du train avant TV, par exemple la roue droite RD, sans inclinaison du véhicule V, l'huile de l'amortisseur droit AMD est refoulée dans les accumulateurs droit AMD et gauche AMG en comprimant le gaz sous haute pression qu'ils comprennent chacun.

En cas de passage d'un même obstacle sur les deux roues RD et RG du train avant TV, sans inclinaison du véhicule V, l'huile de l'amortisseur droit AMD est sensiblement refoulée dans l'accumulateur droit AMD en comprimant le gaz sous haute pression qu'il comprend, et l'huile de l'amortisseur gauche AMG est sensiblement refoulée dans l'accumulateur gauche AMG en comprimant le gaz sous haute pression qu'il comprend.

En cas de faible inclinaison (ou prise de roulis) vers la gauche, l'huile de l'amortisseur gauche AMG est sensiblement refoulée dans la chambre supérieure de l'amortisseur droit AMD. L'huile passe donc librement au travers du boîtier hydraulique BH du côté gauche vers le côté droit. En cas de faible inclinaison (ou prise de roulis) vers la droite, l'huile de l'amortisseur droit AMD est sensiblement refoulée dans la chambre supérieure de l'amortisseur gauche AMG. L'huile passe donc librement au travers du boîtier hydraulique BH du côté droit vers le côté gauche.

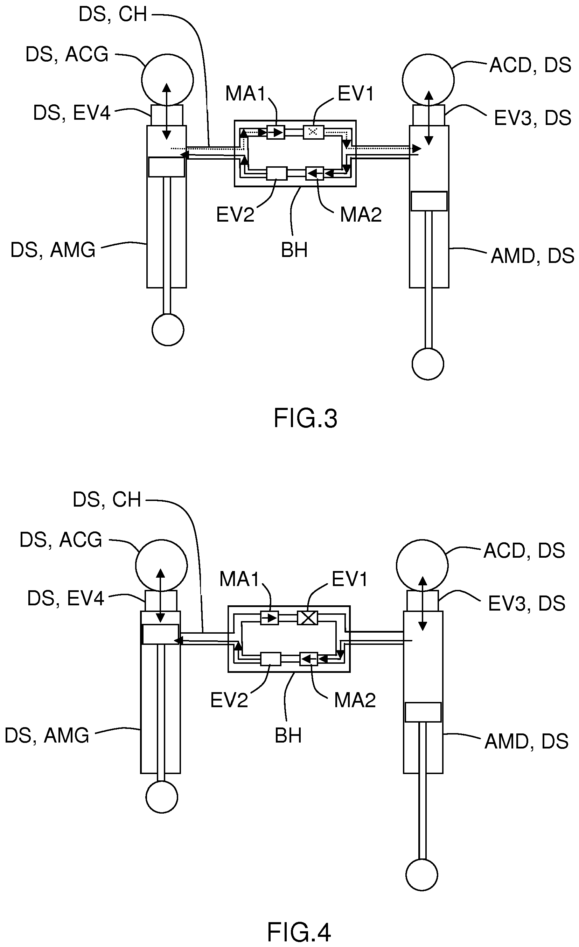

Un deuxième état général est illustré sur la figure 3 pour l'une de ses alternatives. Il correspond soit à un placement de la deuxième électrovanne EV2 dans son état ouvert et de la première électrovanne EV1 dans un état partiellement ouvert lorsque l'inclinaison du véhicule V est vers la gauche et comprise entre la première valeur v1 et une seconde valeur v2 (voir figure 3), soit à un placement de la première électrovanne EV1 dans son état ouvert et de la deuxième électrovanne EV2 dans un état partiellement ouvert lorsque l'inclinaison du véhicule V est vers la droite et comprise entre les première v1 et seconde v2 valeurs. On comprendra que ce deuxième état général est adapté à des inclinaisons intermédiaires qui ne font pas, a priori, courir de risque de chute par basculement au conducteur et donc qui sont choisies par ce conducteur sous le contrôle des moyens de contrôle MCT. La seconde valeur v2 est une inclinaison qui est inférieure à l'inclinaison induisant un basculement naturel du véhicule V.

En cas d'inclinaison (ou prise de roulis) intermédiaire vers la gauche, l'huile de l'amortisseur gauche AMG n'est que partiellement refoulée dans l'amortisseur droit AMD, et l'huile de l'amortisseur droit AMD est sensiblement refoulée dans l'amortisseur gauche AMG, afin de rendre l'augmentation d'inclinaison de plus en plus difficile et ainsi faire sentir au conducteur que plus il incline son véhicule V plus la force à exercer devient grande. L'huile passe donc librement au travers du boîtier hydraulique BH du côté droit vers le côté gauche, mais passe de façon contrôlée au travers du boîtier hydraulique BH du côté gauche vers le côté droit.

En cas d'inclinaison (ou prise de roulis) intermédiaire vers la droite, l'huile de l'amortisseur droit AMG n'est que partiellement refoulée dans l'amortisseur gauche AMD, et l'huile de l'amortisseur gauche AMD est sensiblement refoulée dans l'amortisseur droit AMG, afin de rendre l'augmentation d'inclinaison de plus en plus difficile et ainsi faire sentir au conducteur que plus il incline son véhicule V plus la force à exercer devient grande. L'huile passe donc librement au travers du boîtier hydraulique BH du côté gauche vers le côté droit, mais passe de façon contrôlée au travers du boîtier hydraulique BH du côté droit vers le côté gauche.

La suspension indépendante des deux roues RD et RG est donc toujours assurée dans le deuxième état général.

On notera que lorsque les première EV1 et deuxième EV2 électrovannes peuvent être placées dans une pluralité d'états partiellement ouverts différents, on peut avoir une transition sensiblement continue entre un état de roulis quasi-libre et un état de roulis quasi-bloqué, et inversement. A partir d'un angle ayant la première valeur v1, les moyens de contrôle MCT prennent progressivement le contrôle du roulis pour empêcher le véhicule V de basculer. Ce deuxième état général offre donc une prévention dynamique des chutes en roulage.

Un troisième état général est illustré sur la figure 4 pour l'une de ses alternatives. Il correspond soit à un placement de la deuxième électrovanne EV2 dans son état ouvert et de la première électrovanne EV1 dans son état fermé lorsque l'inclinaison du véhicule V est vers la gauche et supérieure à la seconde valeur v2 (voir figure 4), soit à un placement de la première électrovanne EV1 dans son état ouvert et de la deuxième électrovanne EV2 dans son état fermé lorsque l'inclinaison du véhicule V est vers la droite et supérieure à la seconde valeur v2. On comprendra que ce troisième état général est adapté à des fortes inclinaisons qui font courir un important risque de chute par basculement au conducteur et donc qui sont empêchées par les moyens de contrôle MCT. En fait, la fermeture totale de l'électrovanne EV1 ou EV2 (associée au côté où le véhicule V penche) permet de bloquer l'amortisseur situé du côté où le véhicule V penche, et donc de le transformer en une espèce de butée mécanique.

En cas de forte inclinaison (ou prise de roulis) vers la gauche, l'huile de l'amortisseur gauche AMG est interdite de refoulement vers l'amortisseur droit AMD, afin d'empêcher toute augmentation d'inclinaison, et dans le même temps l'huile de l'amortisseur droit AMD a la possibilité d'être refoulée vers l'amortisseur gauche AMG sous l'action du conducteur qui de par sa volonté a la possibilité de redresser le véhicule lui-même. L'huile ne passe donc librement au travers du boîtier hydraulique BH que du côté droit vers le côté gauche. Ces deux fonctions de blocage du roulis dans un sens et de redressement possible par le conducteur dans l'autre sens sont rendues possibles grâce aux deux clapets anti-retour MA1 et MA2 du circuit hydraulique.

En cas de forte inclinaison (ou prise de roulis) vers la droite, l'huile de l'amortisseur droit AMD est interdite de refoulement vers l'amortisseur gauche AMG, afin d'empêcher toute augmentation d'inclinaison, et dans le même temps l'huile de l'amortisseur gauche AMG a la possibilité d'être refoulée vers l'amortisseur droit AMD sous l'action du conducteur qui de par sa volonté a la possibilité de redresser le véhicule lui-même. L'huile ne passe donc librement au travers du boîtier hydraulique BH que du côté gauche vers le côté droit. Ces deux fonctions de blocage du roulis dans un sens et de redressement possible par le conducteur dans l'autre sens sont rendues possibles grâce aux deux clapets anti-retour MA1 et MA2 du circuit hydraulique.

On notera que la présence des premier MA1 et second MA2 moyens anti-retour permet non seulement d'éviter le basculement du véhicule V lorsque l'inclinaison devient supérieure à la seconde valeur v2 et donc que la première EV1 ou seconde EV2 électrovanne associée au côté incliné est dans son état fermé, mais également de faciliter le redressement du véhicule V par le conducteur.

On notera également qu'il est particulièrement avantageux, bien qu'optionnel, que les moyens de contrôle MC soient agencés pour choisir la première valeur v1 et/ou la seconde valeur v2 en fonction de la vitesse en cours du véhicule V, laquelle est accessible en interne, par exemple auprès de l'ordinateur de bord grâce aux informations fournies par les capteurs du véhicule V.

Par exemple, les moyens de contrôle MC peuvent être agencés pour choisir la première valeur v1 dans un intervalle qui est compris entre environ 10° et environ 20°.

Egalement par exemple, les moyens de contrôle MC peuvent être agencés pour choisir la seconde valeur v2 dans un intervalle qui est compris entre environ 25° et environ 35°.

Il est important de noter que dans tous les cas les première v1 et seconde v2 valeurs sont choisies ou prédéfinies en fonction des caractéristiques intrinsèques du véhicule V, et notamment en fonction de son poids, et/ou de son architecture (et notamment la largeur des trains (ou voies) avant et arrière, et la hauteur du centre de gravité), et/ou de l'évolution de sa tenue de route en fonction de l'inclinaison.

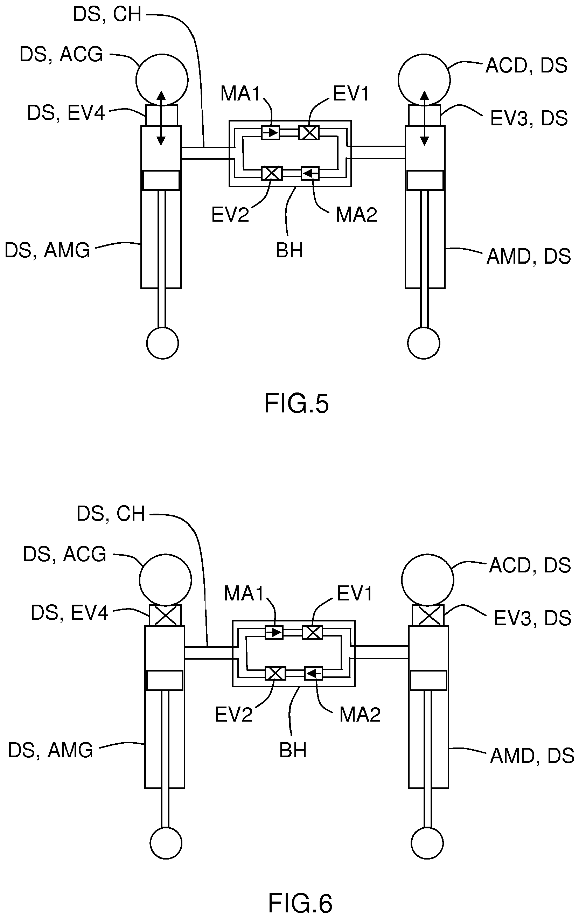

On notera également que le dispositif DS peut être également et éventuellement placé par les moyens de contrôle MCT dans un quatrième état général illustré sur la figure 5 et adapté au cas où le véhicule V est à l'arrêt avec (ici) son moteur tournant, ou circule à faible vitesse. Pour ce faire, les moyens de contrôle MCT sont agencés pour placer les première EV1 et deuxième EV2 électrovannes dans leur état fermé lorsque la vitesse en cours du véhicule V est inférieure à un seuil prédéfini alors que chaque machine motrice (ici le moteur thermique) du véhicule V est en fonctionnement.

Ainsi, lorsque le dispositif DS est placé dans son quatrième état général, et donc que le véhicule V est à l'arrêt ou circule à très faible vitesse (éventuellement en marche arrière), le roulis (ou inclinaison) est interdit du fait que les première EV1 et deuxième EV2 électrovannes sont dans leur état fermé, mais la suspension reste opérationnelle du fait que l'huile peut circuler de l'amortisseur droit AMD vers l'accumulateur droit ACD et/ou de l'amortisseur gauche AMG vers l'accumulateur gauche ACG. Cela permet d'éviter au conducteur de sortir un pied pour éviter un basculement, (ce qui peut être inconfortable et/ou potentiellement dangereux).

Pour certains types de véhicules entièrement carénés, avec lesquels on n'a pas la possibilité de poser le pied par terre, cela reste aussi très intéressant.

Le seuil de vitesse prédéfini peut, par exemple, être compris entre environ 0 km/h et environ 20 km/h.

Afin de permettre le placement du dispositif DS dans encore au moins un cinquième état général illustré sur la figure 6 et adapté au cas où le véhicule V est en stationnement (fonction parking), ce dispositif DS peut également comprendre des troisième EV3 et quatrième EV4 électrovannes, comme illustré non limitativement sur les figures 1 à 6.

La troisième électrovanne EV3 est intercalée entre l'amortisseur droit AMD et l'accumulateur droit ACD afin de contrôler l'accès à l'accumulateur droit ACD en fonction d'instructions définies par les moyens de contrôle MCT. La quatrième électrovanne EV4 est intercalée entre l'amortisseur gauche AMG et l'accumulateur gauche ACG afin de contrôler l'accès à l'accumulateur gauche ACG en fonction d'instructions définies par les moyens de contrôle MCT.

On notera que ces troisième EV3 et quatrième EV4 électrovannes peuvent être placées dans au moins deux états : un état (totalement) ouvert dans lequel ils laissent passer l'intégralité du fluide parvenant sur leur entrée sans perte de débit, et un état (totalement) fermé dans lequel ils interdisent tout passage du fluide parvenant sur leur entrée.

Dans ce cas, les moyens de contrôle MCT sont agencés :
- soit pour placer toutes les électrovannes EV1 à EV4 dans leur état ouvert lorsque l'inclinaison est comprise entre zéro (0) et la première valeur v1 (premier état général),
- soit pour placer la première EV1, respectivement deuxième EV2, électrovanne et les troisième EV3 et quatrième EV4 électrovannes dans leur état ouvert et ladite deuxième (EV2), respectivement première (EV1), électrovanne dans un état partiellement ouvert lorsque l'inclinaison est vers la droite, respectivement la gauche, et comprise entre les première v1 et seconde v2 valeurs (deuxième état général),
- soit pour placer la première EV1, respectivement deuxième EV2, électrovanne et les troisième EV3 et quatrième EV4 électrovannes dans leur état ouvert et la deuxième EV2, respectivement première EV1, électrovanne dans son état fermé lorsque l'inclinaison est vers la droite, respectivement la gauche, et supérieure à la seconde valeur v2 (troisième état général),
- soit éventuellement pour placer les première EV1 et deuxième EV2 électrovannes dans leur état fermé et les troisième EV3 et quatrième EV4 électrovannes dans leur état ouvert lorsque la vitesse en cours du véhicule V est inférieure à un seuil prédéfini alors que chaque machine motrice (ici le moteur thermique) du véhicule V est en fonctionnement (quatrième état général optionnel),
- soit encore pour placer toutes les électrovannes EV1 à EV4 dans leur état fermé lorsque la vitesse en cours du véhicule V est nulle et qu'aucune machine motrice (ici le moteur thermique) du véhicule V ne fonctionne (cinquième état général).

On comprendra que lorsque le dispositif DS est dans son cinquième état général non seulement le roulis (ou inclinaison) est interdit du fait que les première EV1 et deuxième EV2 électrovannes sont dans leur état fermé, mais également la suspension est bloquée du fait que les troisième EV3 et quatrième EV4 électrovannes sont également dans leur état fermé.

On notera que pour faciliter ou rendre plus précis le contrôle des électrovannes, les moyens de contrôle MCT peuvent éventuellement utiliser l'angle de rotation en cours du volant (ou guidon) et/ou le couple en cours et/ou la vitesse en cours de chaque roue et/ou le débattement vertical en cours de chaque roue et/ou les informations fournies par une éventuelle centrale d'attitude. On comprendra que l'un au moins des paramètres mentionnés dans la phrase précédente peut être utile dans certaines situations de roulage. A titre d'exemple non limitatif, lorsqu'il y a un dévers sur la route, il faut pouvoir différencier l'angle de roulis du véhicule V par rapport au sol de l'angle de roulis du véhicule V par rapport à la verticale.

L'invention présente plusieurs avantages, parmi lesquels :
- une amélioration de la sécurité et du plaisir de conduite,
- la possibilité pour le conducteur d'avoir une totale liberté de roulis dans une certaine plage angulaire ([0 ; v2]), grâce à une gestion transparente des situations à risque. Cela permet d'offrir les avantages d'une motocyclette sans ses inconvénients, et donc cela permet à un novice une prise en main rapide de ce type de véhicule sans expérience de la conduite de motocyclettes,
- un dispositif de suspension très simplifié par rapport à un dispositif mécanique à basculeurs, renvois ou autres,
- un transfert de fluide naturel d'un côté à l'autre pendant une phase de roulis, sans qu'il faille utiliser une cinématique complexe de débattement relatif entre les roues gauche et droite, nécessaire à une bonne stabilité en virage,
- un blocage de roulis, à l'arrêt ou en cas d'inclinaison trop importante, qui ne bloque pas la suspension verticale des deux roues, de sorte que ces dernières demeurent indépendantes,
- la possibilité d'avoir des trains avant et arrière équipés tous les deux d'un dispositif de suspension.

## Revendications

1. Dispositif de suspension hydropneumatique (DS) pour un véhicule automobile inclinable (V) ayant un train (TV) comportant des roues droite (RD) et gauche (RG), ledit dispositif (DS) comprenant des amortisseurs droit (AMD) et gauche (AMG) couplés respectivement auxdites roues droite (RD) et gauche (RG) et reliés entre eux par un circuit hydraulique piloté par des moyens de contrôle (MCT), **caractérisé en ce qu'**il comprend en outre des accumulateurs droit (ACD) et gauche (ACG) communiquant respectivement avec lesdits amortisseurs droit (AMD) et gauche (AMG), et **en ce que** ledit circuit hydraulique comprend des première (EV1) et deuxième (EV2) électrovannes associées respectivement à des premier (MA1) et second (MA2) moyens anti-retour autorisant des circulations de fluide selon des sens opposés, et lesdits moyens de contrôle (MCT) sont agencés soit pour placer lesdites première (EV1) et deuxième (EV2) électrovannes dans un état ouvert lorsqu'une inclinaison dudit véhicule (V) par rapport à une direction verticale est comprise entre zéro et une première valeur, soit pour placer ladite première (EV1), respectivement deuxième (EV2), électrovanne dans un état ouvert et ladite deuxième (EV2), respectivement première (EV1), électrovanne dans un état partiellement ouvert lorsque ladite inclinaison est vers la droite, respectivement la gauche, et comprise entre ladite première valeur et une seconde valeur, soit encore pour placer ladite première (EV1), respectivement deuxième (EV2), électrovanne dans un état ouvert et ladite deuxième (EV2), respectivement première (EV1), électrovanne dans un état fermé lorsque ladite inclinaison est vers la droite, respectivement la gauche, et supérieure à ladite seconde valeur.

2. Dispositif selon la revendication 1, **caractérisé en ce que** lesdits moyens de contrôle (MCT) sont agencés pour choisir ladite première valeur et/ou ladite seconde valeur en fonction d'une vitesse en cours dudit véhicule (V).

3. Dispositif selon la revendication 2, **caractérisé en ce que** lesdits moyens de contrôle (MCT) sont agencés pour choisir ladite première valeur dans un intervalle compris entre environ 10° et environ 20°.

4. Dispositif selon l'une des revendications 2 et 3, **caractérisé en ce que** lesdits moyens de contrôle (MCT) sont agencés pour choisir ladite seconde valeur dans un intervalle compris entre environ 25° et environ 35°.

5. Dispositif selon l'une des revendications 1 à 4, **caractérisé en ce que** lesdits moyens de contrôle (MCT) sont agencés pour placer lesdites première (EV1) et deuxième (EV2) électrovannes dans un état fermé lorsque la vitesse en cours dudit véhicule (V) est inférieure à un seuil prédéfini alors qu'une machine motrice dudit véhicule (V) est en fonctionnement.

6. Dispositif selon l'une des revendications 1 à 5, **caractérisé en ce qu'**il comprend en outre des troisième (EV3) et quatrième (EV4) électrovannes intercalées respectivement entre ledit amortisseur droit (AMD) et ledit accumulateur droit (ACD) et entre ledit amortisseur gauche (AMG) et ledit accumulateur gauche (ACG) afin de contrôler l'accès respectivement auxdits accumulateurs droit (ACD) et gauche (ACG), et **en ce que** lesdits moyens de contrôle (MCT) sont agencés soit pour placer toutes lesdites électrovannes (EV1-EV4) dans un état ouvert lorsque ladite inclinaison est comprise entre zéro et ladite première valeur, soit pour placer ladite première (EV1), respectivement deuxième (EV2), électrovanne et lesdites troisième (EV3) et quatrième (EV4) électrovannes dans un état ouvert et ladite deuxième (EV2), respectivement première (EV1), électrovanne dans un état partiellement ouvert lorsque ladite inclinaison est vers la droite, respectivement la gauche, et comprise entre lesdites première et seconde valeurs, soit pour placer ladite première (EV1), respectivement deuxième (EV2), électrovanne et lesdites troisième (EV3) et quatrième (EV4) électrovannes dans un état ouvert et ladite deuxième (EV2), respectivement première (EV1), électrovanne dans un état fermé lorsque ladite inclinaison est vers la droite, respectivement la gauche, et supérieure à ladite seconde valeur, soit encore pour placer toutes lesdites électrovannes (EV1-EV4) dans un état fermé lorsque la vitesse en cours dudit véhicule (V) est nulle et qu'une machine motrice dudit véhicule (V) ne fonctionne pas.

7. Dispositif selon l'une des revendications 1 à 6, **caractérisé en ce que** lesdits premier (MA1) et second (MA2) moyens anti-retour sont des clapets anti-retour.

8. Véhicule automobile inclinable (V) ayant au moins un train (TV) comportant des roues droite (RD) et gauche (RG), **caractérisé en ce qu'**il comprend en outre un dispositif de suspension hydropneumatique (DS) selon l'une des revendications précédentes.

9. Véhicule selon la revendication 8, **caractérisé en ce qu'**il comprend un autre train (TR) comportant une unique roue (R').

## Patentansprüche

1. Hydropneumatische Federungsvorrichtung (DS) für neigbares Fahrzeug (V), das eine Achse (TV) hat, die ein rechtes (RD) und ein linkes (RG) Rad hat, wobei die Vorrichtung (DS) einen rechten Stoßdämpfer (AMD) und einen linken Stoßdämpfer (AMG) umfasst, die jeweils mit dem rechten (RD) und dem linken (RG) Rad gekoppelt und miteinander durch einen hydraulischen Kreislauf verbunden sind, der von Steuermitteln (MCT) gesteuert wird, **dadurch gekennzeichnet, dass** sie außerdem einen rechten Speicher (ACD) und einen linken Speicher (ACG) umfasst, die jeweils mit dem rechten (AMD) und dem linken (AMG) Stoßdämpfer kommunizieren, und dass der hydraulische Kreislauf, ein erstes (EV1) und ein zweites (EV2) Magnetventil umfasst, die jeweils mit einem ersten (MA1) und zweiten (MA2) Rückschlagmittel verbunden sind, das Rezirkulationen von Fluid gemäß entgegengesetzten Richtungen gestattet, und dass die Steuermittel (MCT) eingerichtet sind, um das erste (EV1) und das zweite (EV2) Magnetventil in einen offenen Zustand zu platzieren, wenn die Neigung des Fahrzeugs (V) in Bezug auf eine vertikale Richtung zwischen null und einem ersten Wert liegt, oder um das erste (EV1) bzw. zweite (EV2) Magnetventil in einen offenen Zustand und das zweite (EV2) bzw. das erste (EV1) Magnetventil in einen teilweise offenen Zustand zu platzieren, wenn die Neigung nach rechts bzw. nach links liegt und zwischen dem ersten Wert und einem zweiten Wert liegt, oder auch um das erste (EV1) bzw. das zweite (EV2) Magnetventil in einen offenen Zustand und das zweite (EV2) bzw. erste (EV1) Magnetventil in einen geschlossenen Zustand zu platzieren, wenn die Neigung nach rechts bzw. links liegt und größer ist als der zweite Wert.

2. Vorrichtung nach Anspruch 1, **dadurch gekennzeichnet, dass** die Steuermittel (MCT) eingerichtet sind, um den ersten und/oder den zweiten Wert in Abhängigkeit von einer aktuellen Geschwindigkeit des Fahrzeugs (V) auszuwählen.

3. Vorrichtung nach Anspruch 2, **dadurch gekennzeichnet, dass** die Steuermittel (MCT) eingerichtet sind, um den ersten Wert in einem Intervall zwischen etwa 10° und etwa 20° auszuwählen.

4. Vorrichtung nach einem der Ansprüche 2 und 3, **dadurch gekennzeichnet, dass** die Steuermittel (MCT) eingerichtet sind, um den zweiten Wert in einem Intervall zwischen etwa 25° und etwa 35° auszuwählen.

5. Vorrichtung nach einem der Ansprüche 1 bis 4, **dadurch gekennzeichnet, dass** die Steuermittel (MCT) eingerichtet sind, um das erste (EV1) und das zweite (EV2) Magnetventil in einen geschlossenen Zustand zu platzieren, wenn die aktuelle Geschwindigkeit des Fahrzeugs (V) kleiner ist als ein vorbestimmter Schwellenwert, während eine Antriebsmaschine des Fahrzeugs (V) in Betrieb ist.

6. Vorrichtung nach einem der Ansprüche 1 bis 5, **dadurch gekennzeichnet, dass** sie außerdem ein drittes (EV3) und viertes (EV4) Magnetventil umfasst, die jeweils zwischen dem rechten Stoßdämpfer (AMD) und dem rechten Speicher (ACD) und zwischen dem linken Stoßdämpfer (AMG) und dem linken Speicher (ACG) eingefügt sind, und dass die Steuermittel (MCT) eingerichtet sind, um den Zugang jeweils zu dem rechten Speicher (ACD) und dem linken Speicher (ACG) zu steuern, und dass die Steuermittel (MCT) eingerichtet sind, um entweder alle Magnetventile (EV1 bis EV4) in einen offenen Zustand zu platzieren, wenn die Neigung zwischen null und dem ersten Wert liegt, oder um das erste (EV1) bzw. das zweite (EV2) Magnetventil sowie das dritte (EV3) und das vierte (EV4) Magnetventil in einen offenen Zustand zu platzieren, und das zweite (EV2) bzw. erste (EV1) Magnetventil in einen teilweise offenen Zustand zu platzieren, wenn die Neigung nach rechts bzw. nach links liegt, und zwischen dem ersten und zweiten Wert liegt, oder um das erste (EV1) bzw. zweite (EV2) Magnetventil und das dritte (EV3) und vierte (EV4) Magnetventil in einen offenen Zustand zu platzieren, und das zweite (EV2) bzw. erste (EV1) Magnetventil in einen geschlossenen Zustand zu platzieren, wenn die Neigung nach rechts bzw. nach links liegt und größer ist als der zweite Wert, oder auch um alle Magnetventile (EV1 bis EV4) in einen geschlossenen Zustand zu platzieren, wenn die aktuelle Geschwindigkeit des Fahrzeugs (V) null ist und eine Antriebsmaschine des Fahrzeugs (V) nicht in Betrieb ist.

7. Vorrichtung nach einem der Ansprüche 1 bis 6, **dadurch gekennzeichnet, dass** das erste (MA1) und das zweite (MA2) Rückschlagmittel Rückschlagventile sind.

8. Neigbares Kraftfahrzeug (V), das mindestens eine Achse (TV) hat, die ein rechtes (RD) und ein linkes (RG) Rad umfasst, **dadurch gekennzeichnet, dass** es außerdem eine hydropneumatische Federungsvorrichtung (DS) nach einem der vorhergehenden Ansprüche umfasst.

9. Fahrzeug nach Anspruch 8, **dadurch gekennzeichnet, dass** es eine andere Achse (TR) umfasst, die ein einziges Rad (R') umfasst.

## Claims

1. A hydropneumatic suspension device (DS) for a tiltable motor vehicle (V) having an axle (TV) comprising right (RD) and left (LD) wheels, said device (DS) including right (AMD) and left (AMG) shock absorbers coupled respectively to said right (RD) and left (RG) wheels and connected to one another by a hydraulic circuit driven by control means (MCT), **characterized in that** it further includes right (ACD) and left (ACG) accumulators communicating respectively with said right (AMD) and left (AMG) shock absorbers, and **in that** said hydraulic circuit includes first (EV1) and second (EV2) solenoid valves associated respectively with first (MA1) and second (MA2) non-return means permitting circulations of fluid along opposite directions, and said control means (MCT) are arranged either to place said first (EV1) and second (EV2) solenoid valves in an open state when a tilt of said vehicle (V) with respect to a vertical direction is comprised between zero and a first value, or to place said first (EV1), respectively second (EV2), solenoid valve in an open state and said second (EV2), respectively first (EV1), solenoid valve in a partially open state when said tilt is towards the right, respectively the left, and comprised between said first value and a second value, or again to place said first (EV1), respectively second (EV2), solenoid valve in an open state and said second (EV2), respectively first (EV1), solenoid valve in a closed state when said tilt is towards the right, respectively the left, and greater than said second value.

2. The device according to claim 1, **characterized in that** said control means (MCT) are arranged to select said first value and/or said second value as a function of a current speed of said vehicle (V).

3. The device according to claim 2, **characterized in that** said control means (MCT) are arranged to select said first value in an interval comprised between approximately 10° and approximately 20°.

4. The device according to one of claims 2 and 3, **characterized in that** said control means (MCT) are arranged to select said second value in an interval comprised between approximately 25° and approximately 35°.

5. The device according to one of claims 1 to 4, **characterized in that** said control means (MCT) are arranged to place said first (EV1) and second (EV2) solenoid valves in a closed state when the current speed of said vehicle (V) is less than a predefined threshold while a driving machine of said vehicle (V) is in operation.

6. The device according to one of claims 1 to 5, **characterized in that** it further includes third (EV3) and fourth (EV4) solenoid valves intercalated respectively between said right shock absorber (AMD) and said right accumulator (ACD) and between said left shock absorber (AMG) and said left accumulator (ACG) so as to control the access respectively to said right (ACD) and left (ACG) accumulators, and **in that** said control means (MCT) are arranged either to place all the said solenoid valves (EV1-EV4) in an open state when said tilt is comprised between zero and said first value, or to place said first (EV1), respectively second (EV2), solenoid valve and said third (EV3) and fourth (EV4) solenoid valves in an open state and said second (EV2), respectively first (EV1), solenoid valve in a partially open state when said tilt is towards the right, respectively the left, and comprised between said first and second values, or to place said first (EV1), respectively second (EV2), solenoid valve and said third (EV3) and fourth (EV4) solenoid valves in an open state and said second (EV2), respectively first (EV1), solenoid valve in a closed state when said tilt is toward the right, respectively the left, and greater than said second value, or again to place all said solenoid valves (EV1-EV4) in a closed state when the current speed of said vehicle (V) is zero and a driving machine of said vehicle (V) is not in operation.

7. The device according to one of claims 1 to 6, **characterized in that** said first (MA1) and second (MA2) non-return means are check valves.

8. A tiltable motor vehicle (V) having at least one axle (TV) comprising right (RD) and left (RG) wheels, **characterized in that** it further includes a hydropneumatic suspension device (DS) according to one of the preceding claims.

9. The vehicle according to claim 8, **characterized in that** it includes another axle (TR) comprising a single wheel (R').
